# EUROPEAN PATENT APPLICATION

(11) **EP 0 585 074 A2**
(43) Date of publication of application: **02.03.1994**
(21) Application number: 93306608.6
(22) Date of filing: 20.08.1993
(51) Int. Cl.: G06F 15/72

(54) **Automatic image creation by merging text image and form image**

(30) Priority: 21.08.1992 US 933426
(71) Applicant: XEROX CORPORATION, Rochester New York 14644 (US)
(72) Inventor: Roberston, George G., Foster City, California 94404 (US)
(74) Representative: Goode, Ian Roy

(57) **Abstract**

Input images of a form (250) and of a text (260) are used to automatically obtain an output image (300) showing the form with the text in a field (302). A processor receives data defining the input images (250,260), automatically obtains positioning data indicating positions of boundaries around the field (254) so that the text (262) can be positioned within the field, and automatically obtains data defining the output image. The positioning data can be automatically obtained by operating on plain images of the form and of the text; by operating on images of the form and of the text that have been marked to indicate the field and the text; or by operating on images of the form and of the text that include machine readable information indicating the positions of the field and the text. Skew can be corrected before merging a text with a form, and text can be scaled (294,296) and reformatted if necessary to fit into a field. If the input images include more than one field on the form and more than one text segment, the processor can obtain linking data indicating a respective text segment for a field. The linking data can also indicate a field that is a continuation of another field or a text segment that is a continuation of another text segment, in case of overrun or insufficient text to fill a field. The processor could be in a fax server, a digital copier, or a computer with a scanner and a printer.

## Description

The present invention relates to techniques that automatically create images that include text.

Suganuma et al., US-A 4,542,378, describe document processing techniques for preparing individual slips such as vouchers or certificates from a list or, conversely, preparing a list from individual slips.

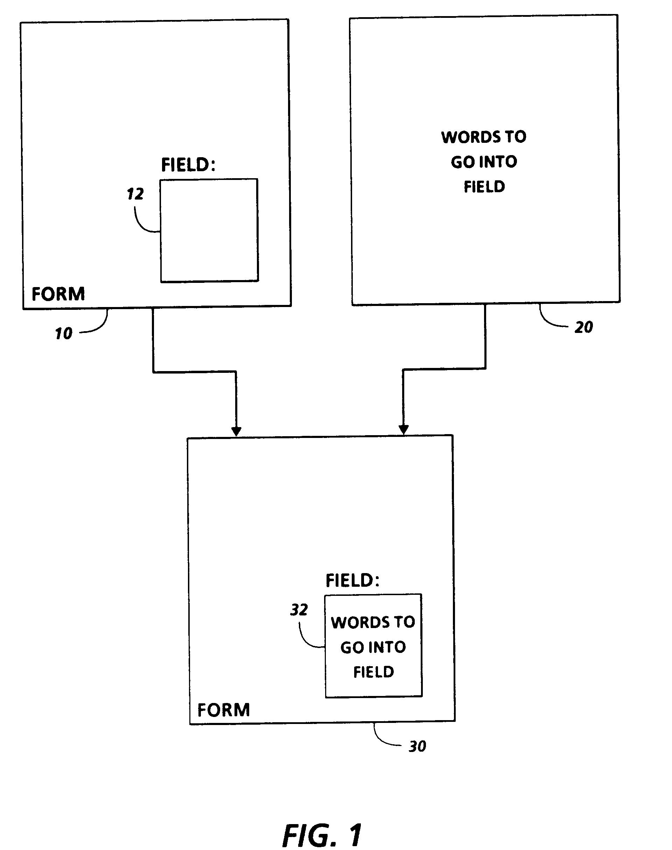

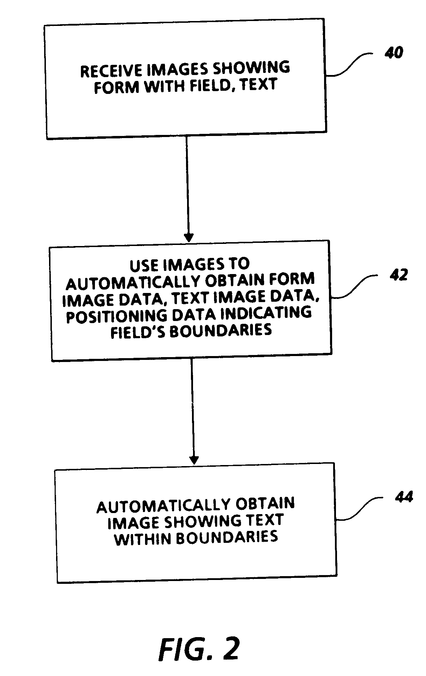

As shown and described in relation to Figs. 1 and 2 of Suganuma et al., a certificate form is first placed at a predetermined position on a platen and is scanned. The signals are binarily digitized and stored in memory. Then, a page containing a voucher for which a certificate is required is taken from a book and placed at a predetermined position on the platen, a position number of the voucher is designated by an operation panel, the voucher is scanned, and the signals are stored in memory in the same manner as with the certificate form. A control section reads the data for the certificate form from memory, reads out an additional required portion from the data from the book, and transcribes the portion while electronically overlaying it with the data for the certificate form to prepare data for a final seal impression certificate. The data for the seal impression certificate is then transferred to a printer and printed, with the position of the outputted original voucher optionally designated by the operation panel. If the areas of the voucher and the area of the form to which it is to be transferred are different, they may be aligned by an enlarging or reducing operation.

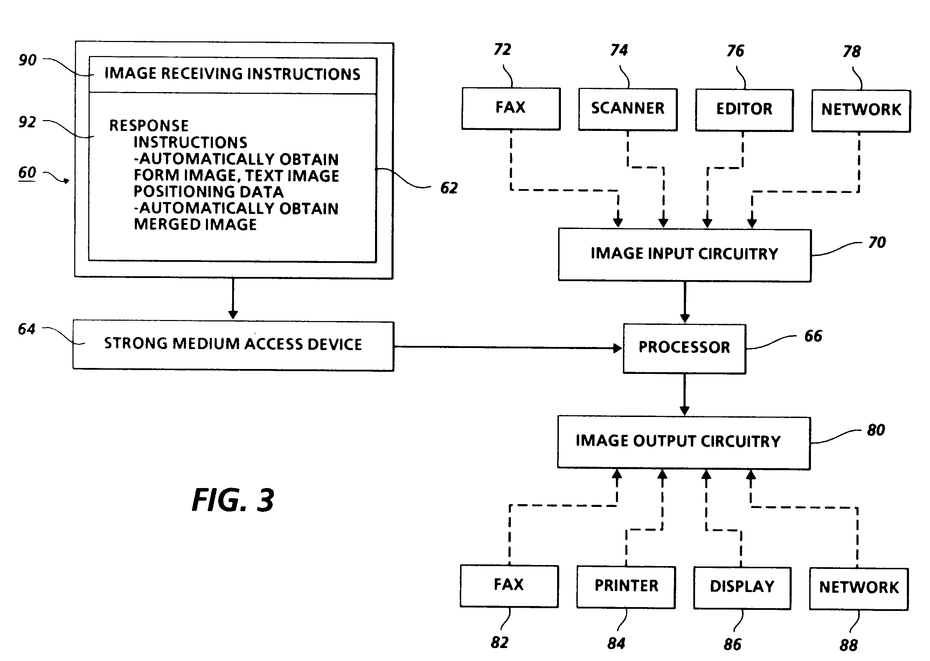

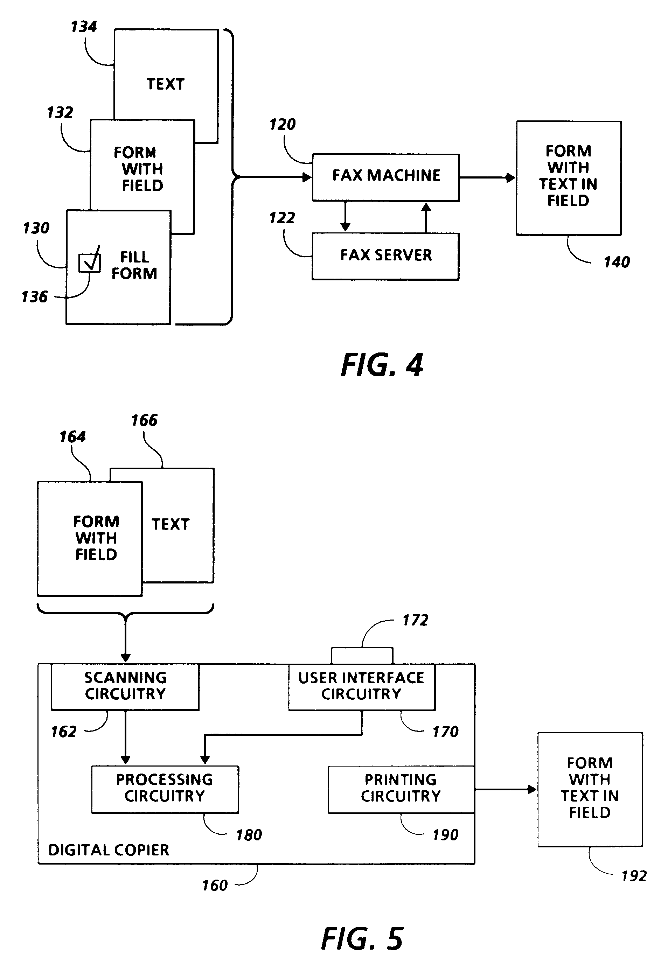

As shown and described in relation to Figs. 3 and 4 of Suganuma et al., portions of image data of individual slips to be cut out (transcribed) are previously designated by their coordinates and are recognized by the system. Then a list form is placed at a predetermined position on a platen and is scanned. The signals are digitalized and filed in memory. Next, several individual slips (written subscriptions) are stacked in an order to appear on a list and are placed at a predetermined position on an automatic document feeder, after which the platen scans the individual slips and files the necessary information in the memory. Then a control section reads the data for the list form from the memory, cuts-out the previously stored designated portions of the individual slip data, and transcribes them, while overlaying electronically, on the data for the list form to prepare data for a list. The data for the list is transferred to an electronic printer and printed.

At col. 4 lines 42-46, Suganuma et al. indicate that reference marks may be attached to the original slips or the list and the positions thereof may be calculated based on the recognition thereof. At col. 4 lines 47-51, Suganuma et al. indicate that input order of individual slips may be determined by the system by recognizing marks or numerical figures placed on the individual slips.

Greene, US-A 4,588,211 ('211), and Greene, US-A 4,634,148 ('148), describe machine readable document techniques. Greene '148 describes a negotiable instrument for automatic bank scanning and processing. As shown and described in relation to Fig. 1 of Greene '148, a document includes fields for a signature, for a payee, for a numerical value, and for a written value. As shown and described in relation to Fig. 5 of Greene '148, the fields can be scanned to obtain a digital signal that is stored as image data. The image data can be sorted by account number and merged with other files to generate a statement file. A statement generator creates a hard copy statement that includes payee and amount fields that accurately depict handwritten portions of processed documents. Greene '211 describes a document processing apparatus that includes a statement generator in relation to Fig. 1.

Hengst et al., EP-A 478 335, describe an electronic printing system that has a merge library of merge items that can be selected and merged with prints. As shown and described in relation to Fig. 7-9, the printing system displays a job ticket with a merge selection that can be actuated to display a special scorecard with a merge icon. Actuating the merge icon displays a merge library card file and a merge library icon that can be actuated to open the merge library card file showing merge items in a merge library. The merge library in main memory stores merge images that may be selected for merger with the images of a print job, such as pictures, logos, headings, form paragraphs, etc. Figs. 10-17 relate to a merge operation, and, in particular, positioning of a merge item on a print is shown and described in relation to Figs. 16 and 17. As shown and described in relation to Figs. 18 and 19, a document may be scanned to convert the document image to image signals and a cut and paste process can be performed to obtain a display of a merge item, and the operator can then change its size or orientation. Then the document is rescanned to obtain the finished merge item.

The invention deals with problems that arise in inserting text into a field of a form. Many forms include one or more fields for insertion of text.

Some text editing software permits a user to insert text into a form. This is only possible, however, when the form is available as an electronic document that can be edited by the specific text editing software being used, which rarely occurs. Editable versions of forms are not commonly available and, even when available, are likely to be obsolete due to form revisions.

Text that is available in an electronic document can sometimes be printed in a field of a form available as a paper document. For example, text editing software can be used to format text, inserting margins, blank spaces, or other format features so that the text appears to be positioned and shaped to fit within the field. The formatted text can then be printed onto a copy of the form. This technique is also inefficient, however, because several iterations may be required to correctly position the text within the field.

Text can be inserted in a field of a form available as a paper document by manually typing or writing the text. If the text is available in an existing document, however, retyping or rewriting is inefficient and may introduce errors.

Text that is available in a paper document or that can be printed onto paper from an electronic document can also be cut and pasted into a field of a form available as a paper document. The cut and pasted version of the form can then be copied. This technique can be inefficient and messy if small segments of text, such as words, must be cut and pasted. In addition, this technique may introduce artifacts such as skew of a pasted segment or lines or shadows indicating edges of pasted segments.

It is an object of the invention to provide a technique for inserting text in a field of a form that avoids these problems.

According to the present invention, there is provided a method of operating a system that includes image input circuitry for receiving data defining images as input; image output circuitry for providing data defining images as output; and a processor connected for receiving data defining images from the image input circuitry and for providing data defining images to the image output circuitry; the method comprising operating the processor to receive input image data from the image input circuitry; the input image data defining a first image set that shows a form that includes a first field and a second image set that shows a text; operating the processor to use the input image data to automatically obtain form image data, text image data, and positioning data; the form image data defining an image of the form from the first image set; the text image data defining an image of the text from the second image set; the positioning data indicating positions of boundaries around the first field so that the text can be positioned within the first field; and operating the processor to use the form image data, the text image data, and the positioning data to automatically obtain output image data and to provide the output image data to the image output circuitry; the output image data defining a third image set that shows the text and the form, the third image set showing the text positioned within the boundaries of the first field.

The technique of the invention has the effect of merging an image of the form with an image of the text, and has the advantage of permitting automatic form filling efficiently and easily.

The technique can be implemented by receiving input image data and using the input image data to automatically obtain output image data. The input image data define a first image that includes a form. The input image data also define a second image that includes text. The output image data define a third image that includes the form from the first image with the text from the second image within a field.

To obtain the output image data, the technique automatically obtains form image data, text image data, and positioning data from the input image data. The form image data define an image of the form. The text image data define an image of the text. The positioning data indicate positions of boundaries of a field within the form so that the text can be positioned within the field. The technique then uses the form image data, the text image data, and the positioning data to automatically obtain the output image data such that the third image includes the form with the text positioned within the field's boundaries.

The positioning data could be automatically obtained in several ways. For example, the input image data could be used to obtain data indicating pixels in an area that is enclosed by lines, that meets a blank area criterion, and that is sufficiently large to be filled; the positions of boundaries could be obtained by finding a bounding box for the pixels. The form could include a mark inside a field to be filled, and the mark could be detected, making it unnecessary to apply a blank area criterion; the technique could remove the mark in obtaining the form image data. Alternatively, the form could include machine readable information indicating a field's boundaries.

The technique can be implemented with a fax server or other machine that can transmit and receive data defining images. For example, the input image data can be transmitted to the fax server from a fax machine. The input image data can define a sheet indicating a merge operation. The input image data can also include information indicating a separation between an image set defining a form and an image set defining a text. The fax server can use the input image data to obtain the form image data, the text image data, and the positioning data. Then the fax server can use the form image data, the text image data, and the positioning data to obtain the output image data. The fax server can transmit the output image data to the fax machine where it is printed.

Similarly, the technique could be implemented with a copying machine that can obtain and provide data defining images, such as through scanning circuitry and printing circuitry. Again, the copying machine's processing circuitry can use input image data from the scanning circuitry to obtain the the form image data, the text image data, and the positioning data. Then the processing circuitry can use the form image data, the text image data, and the positioning data to obtain the output image data, which it provides to the printing circuitry.

Finally, the technique could be implemented with a computer, such as a workstation or personal computer, that can transmit and receive data defining images through input/output devices, such as a printer and a scanner. As above, the computer's central processing unit (CPU) can use input image data from the scanner or other image input device to obtain the form image data, the text image data, and the positioning data. Then the CPU can use the form image data, the text image data, and the positioning data to obtain the output image data, which it provides to the printer or other image output device.

A method and system in accordance with the invention will now be described, by way of example, with reference to the accompanying drawings, in which:-

Fig. 1 is a schematic flow diagram showing how two images, one with a form and the other with text, can be merged to position the text in a field in the form.

Fig. 2 is a flow chart showing general acts in merging images of a form and text as in Fig. 1.

Fig. 3 is a schematic block diagram showing a software product that can be accessed by a system to automatically merge images as in Fig. 2.

Fig. 4 is a schematic block diagram showing a fax server that can automatically merge images of a form and text.

Fig. 5 is a schematic block diagram showing a digital copier with processing circuitry that can automatically merge images of a form and text.

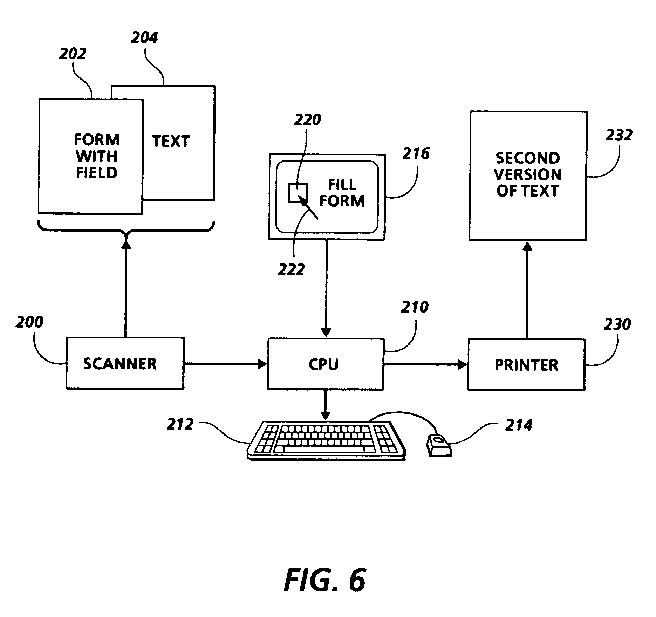

Fig. 6 is a schematic block diagram showing a computer with a CPU that can automatically merge images of a form and text.

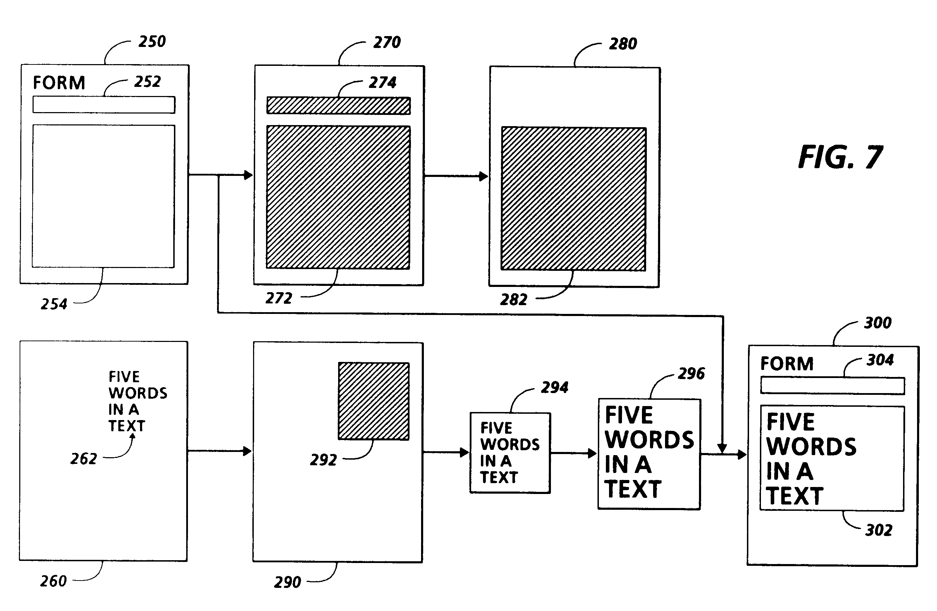

Fig. 7 is a schematic flow diagram showing acts in automatically merging a plain image of a form with a plain image of text.

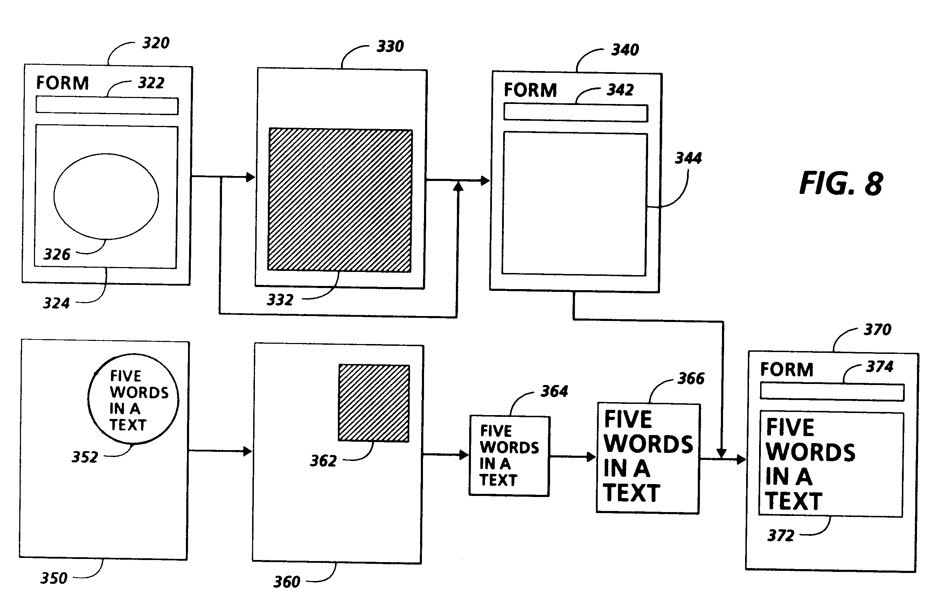

Fig. 8 is a schematic flow diagram showing acts in automatically merging an image of a form in which a field is marked with an image of text in which a text segment is marked.

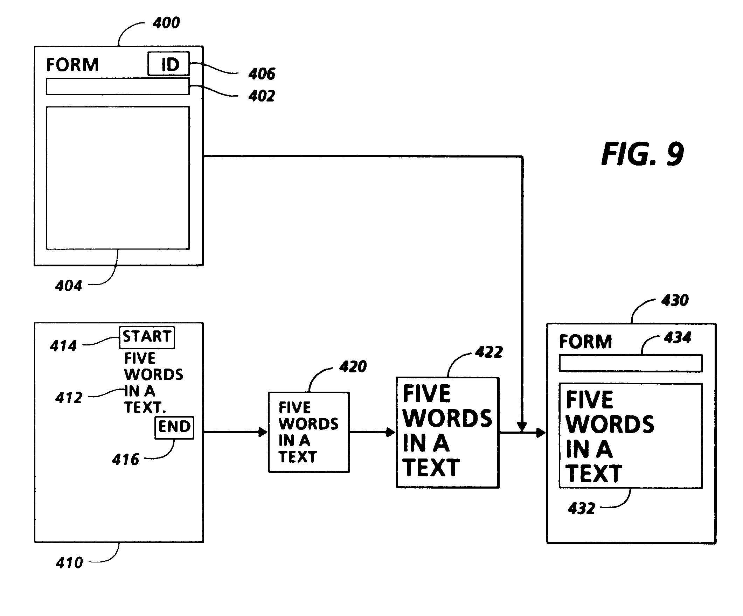

Fig. 9 is a schematic flow diagram showing acts in automatically merging an image of a form with encoded form identifying information with an image of text with encoded information indicating a text segment.

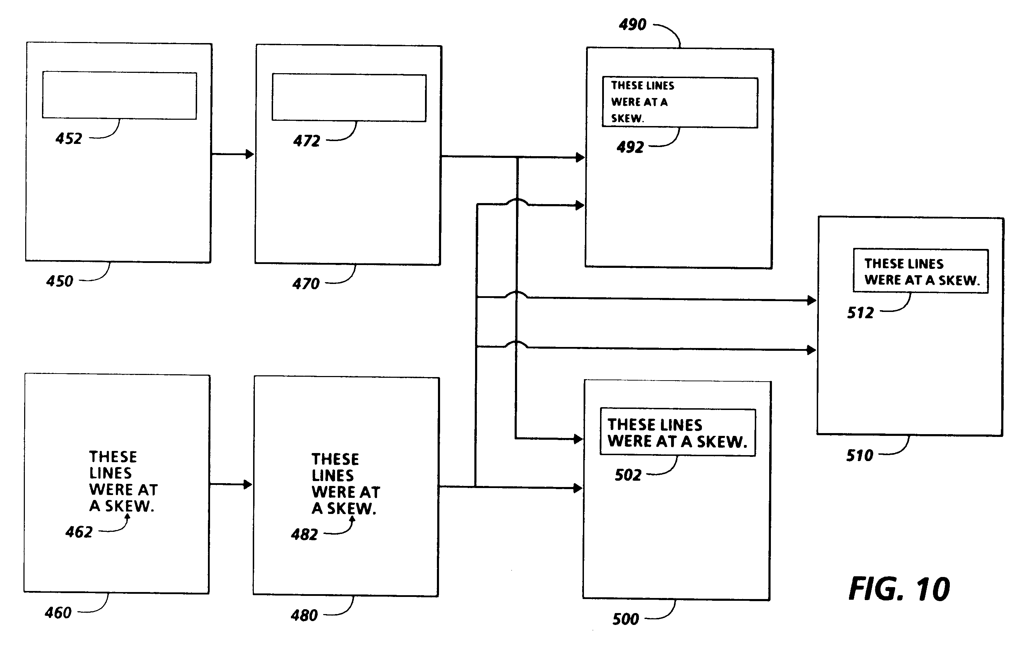

Fig. 10 is a schematic flow diagram showing general acts in automatically merging images as in Figs. 7-9.

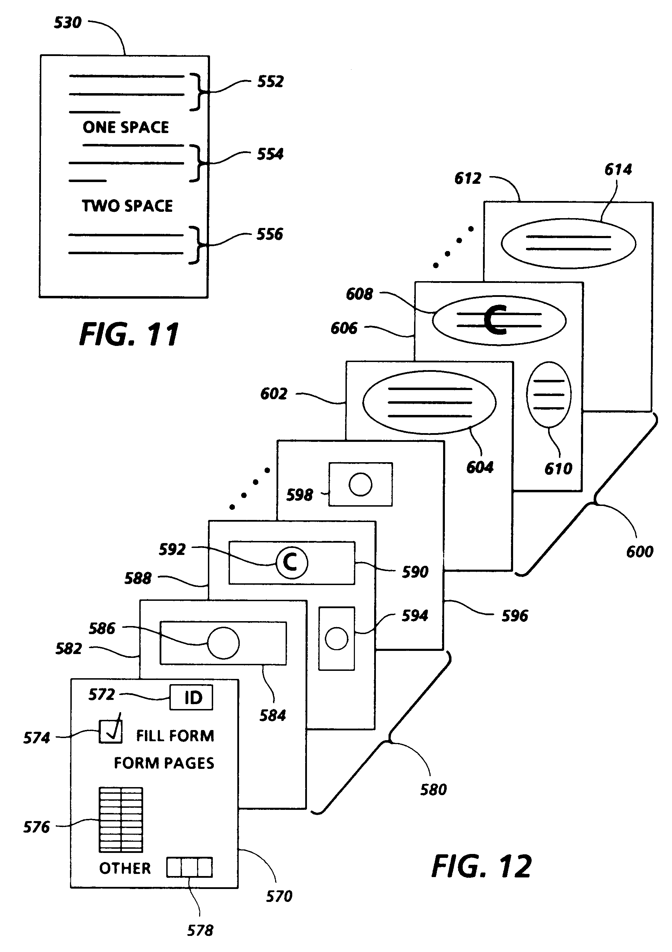

Fig. 11 is a schematic view of an image of text in which spacings between paragraphs provide information for linking text segments to fields.

Fig. 12 is a schematic view of a sequence of images including a form for requesting a fill form operation and in which marks in fields and in text indicate continuations between fields and text segments for linking.

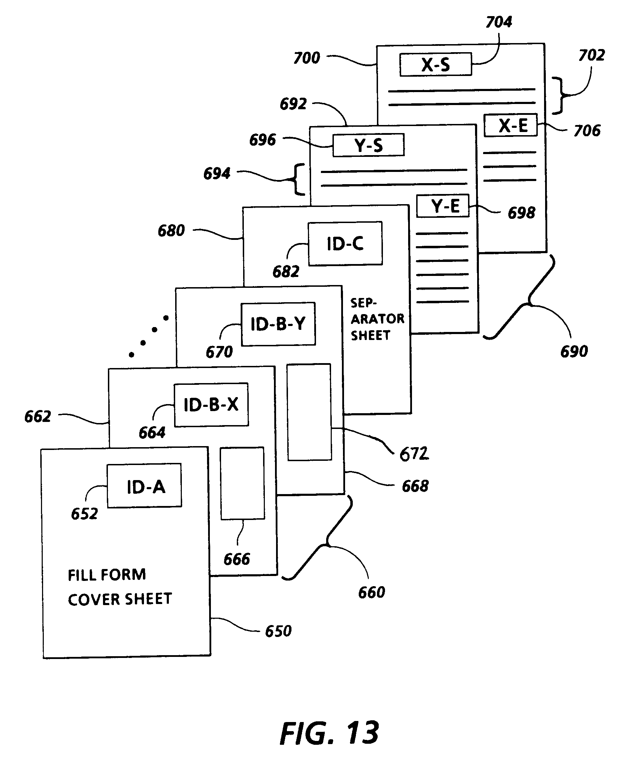

Fig. 13 is a schematic view of a sequence of images including a cover sheet requesting a fill form operation and a separator sheet, and in which encoded information indicate types of fields and text segments for linking.

### A. General Features

Figs. 1-3 illustrate general features of the invention. Fig. 1 is a schematic flow diagram showing how two images, one with a form and the other with text, can be merged to automatically obtain an image of the form with the text positioned in a field. Fig. 2 is a flow chart showing general acts in automatically merging two images as in Fig. 1. Fig. 3 is a schematic block diagram showing a software product that can be accessed to automatically merge two images as in Fig. 2.

Image 10 in Fig. 1 shows a form with field 12. Field 12 is illustratively a blank area surrounded by a line. Many forms include lines, corner marks, edges, or similar boundary cues around fields to indicate boundaries within which text should be inserted. Many forms also include a small amount of text within or just outside a field's boundaries to indicate the type of text to be inserted in the field.

Image 20 in Fig. 1 shows a text, "Words to go into field."

Data defining image 30 in Fig. 1 are obtained automatically from data defining images 10 and 20. Data defining the form in image 10 are obtained from data defining image 10. Data defining the text in image 20 are obtained from data defining image 20. Positioning data indicating boundaries of field 12 are also obtained from data defining image 10 so that the text can be positioned within field 32 in image 30, as shown.

The act in box 40 in Fig. 2 receives input image data defining a first image set that shows a form with a field, like image 10 in Fig. 1, and a second image set that shows text, like image 20 in Fig. 1. The act in box 42 automatically obtains form image data defining an image of the form, text image data defining an image of the text, and positioning data indicating positions of the field's boundaries. The act in box 44 uses the data obtained in box 42 to automatically obtain data defining a third image set that shows the form with the text within the field's boundaries, like image 30 in Fig. 1.

Fig. 3 shows software product 60, an article of manufacture that can be used in a system that includes components like those shown in Fig. 3. Software product 60 includes data storage medium 62 that can be accessed by storage medium access device 64. Data storage medium 62 could, for example, be a magnetic medium such as a set of one or more floppy disks, an optical medium such as a set of one or more CD-ROMs, or any other appropriate medium for storing data.

Data storage medium 62 stores data that storage medium access device 64 can provide to processor 66. Processor 66 is connected for receiving data defining images from image input circuitry 70. The data could be obtained from facsimile (fax) machine 72; from scanner 74, which could be the scanner of a digital copier or an input/output device of a computer; from editor 76, which could be a forms editor or other interactive image editor controlled by user input devices such as a keyboard and mouse or a pen- or stylus-based input device; or from network 78, which could be a local area network or other network capable of transmitting data defining an image.

Processor 66 is also connected for providing data defining images to image output circuitry 80. The data could in turn be provided to fax machine 82, to printer 84, to display 86, or to network 88. Printer 84 could be the printer of a digital copier or an input/output device of a computer.

In addition to data storage medium 62, software product 60 includes data stored by storage medium 62. The stored data include data indicating image receiving instructions 90, which can be executed to perform the act in box 40 in Fig. 2. The stored data also include data indicating response instructions 92. Response instructions 92 can be executed to automatically obtain form image data, text image data, and positioning data, as in box 42 in Fig. 2. Response instructions 92 can also be executed to automatically obtain data defining a merged image, as in box 44 in Fig. 2.

### B. Implementations

The general features described above could be implemented in numerous ways on various machines to obtain merged images.

### 1. Machines

Figs. 4-6 illustrate three machines in which the invention can be implemented by modifying conventional components. Fig. 4 shows a fax server implementation. Fig. 5 shows a digital copier implementation. Fig. 6 shows a computer implementation.

In Fig. 4, fax machine 120 is used to transmit data defining an image set to fax server 122. The transmitted data define image 130 showing a first form, image 132 showing a second form, and image 134 showing a text. The first form includes a first field with check box 136 marked to request a fill form operation merging the second form and the text.

Fax server 122 uses data defining image 130 to obtain fill form request data indicating a request for a fill form operation, based on information in the data defining image 130 indicating that check box 136 is marked. Then, responding to the request, fax server 122 uses data defining image 132 to automatically obtain form image data defining an image showing the form. Fax server 122 also uses data defining image 134 to automatically obtain text image data defining an image showing the text. Fax server 122 also uses data defining images 130, 132, and 134 to automatically obtain positioning data indicating positions of boundaries around a field on the form so that the text can be positioned within the field. Fax server 122 uses the form image data, the text image data, and the positioning data to automatically obtain data defining an image showing the form with the text within the field. Fax server 122 transmits this data to fax machine 120, where it is printed to obtain image 140.

In Fig. 5, digital copier 160 includes scanning circuitry 162 that obtains data defining image 164 showing a form and image 166 showing a text. User interface circuitry 170 includes touch sensing device 172, which can be a push button, a heat or pressure sensitive element, a capacitance sensing element, or other device for sensing a touching action. When a user touches device 172, user interface circuitry 170 provides touch data indicating that device 172 has been touched.

Processing circuitry 180 uses the touch data to obtain fill form request data indicating a request for a fill form operation. Then, responding to the request, processing circuitry 180 uses data defining images 164 and 166 to automatically obtain form image data defining an image showing the form, text image data defining an image showing the text, and positioning data indicating positions of boundaries around a field on the form so that the text can be positioned within the field. Processing circuitry 180 uses the form image data, the text image data, and the positioning data to automatically obtain data defining an image showing the form with the text in the field. This data is provided to printing circuitry 190 for printing of image 192.

In Fig. 6, scanner 200 obtains data defining image 202 showing a form and 204 showing a text. This data is provided to CPU 210 of a computer, such as a workstation or personal computer. CPU 210 is connected for receiving data indicating user actions from keyboard 212 and mouse 214 and for providing data defining images to display 216. CPU provides an image that includes selectable unit 220 that can be selected to request a fill form operation. Using mouse 214, a user can position pointer 222 and provide a signal indicating selection of selectable unit 220.

CPU 210 uses the signal to obtain fill form request data indicating a request for a fill form operation. In response to the request, CPU 210 uses the data defining image 202 and image 204 to automatically obtain form image data defining an image showing the form, text image data defining an image showing the text, and positioning data indicating positions of boundaries around a field on the form so that the text can be positioned within the field. CPU 210 then uses the form image data, the text image data, and the positioning data to automatically obtain data defining an image showing the form with the text in the field. This data is provided to printer 230 for printing of image 232.

### 2. Merging

Figs. 7-10 illustrate ways in which form image data, text image data, and positioning data can be automatically obtained and used to automatically obtain data defining an image showing a form with text in a field. Fig 7 shows an implementation in which form image data, text image data, and positioning data are obtained from plain images. Fig. 8 shows an implementation in which form image data, text image data, and positioning data are obtained from images that have been marked by a user. Fig. 9 shows an implementation in which form image data, text image data, and positioning data are obtained from images that include machine readable encoded information. Fig. 10 shows a general implementation that includes deskewing of form and text, scaling of text, and reformatting of text.

In Fig. 7, image 250 shows a form that includes fields 252 and 254. Field 252 is a relatively small field while field 254 is relatively large. Image 260 shows text 262, and could also include non-text information (not shown). As described above, a fax machine or other scanning circuitry can be used to obtain data defining images 250 and 260.

Data defining image 250 can be used to obtain data defining image 270, a version of image 250 in which pixels within fields 252 and 254 are all black and pixels outside the fields are all white. Image 270 could be a mask produced by morphological techniques resembling those described in copending EP-A-0,543,599 and referred to as "the image morphology application." For example, data defining image 270 could be produced by performing, first, a morphological edge fill operation that fills with black pixels inward from the edges of the image until a closed boundary is reached; the edge filled image could then be inverted to obtain black pixels within fields 252 and 254 and white pixels elsewhere, as in image 270.

Small features within otherwise solid areas could be eliminated by morphological open operations on data defining image 250 to convert black pixels within generally white areas to white pixels. To find a smaller field nested within a larger field, a morphological fill operation could be performed within the larger field beginning at any location; if the fill operation fills less than the larger field, the area filled can be removed from the larger field, and another fill operation can be performed on the non-filled area to find other smaller fields. If it is desired to extract contents of a field that has been found by an edge fill operation as described above, the inverted edge filled image could again be edge filled and inverted to obtain an image of the contents; this image could then be used to delete the contents of the field.

The edge filling technique may not work if a field's boundaries are not continuous. Prior to edge filling, a morphological close operation could be performed to close gaps in a field's boundaries. Morphological techniques could alternatively be used to find a bounding box for each connected component in image 250, after which a size criterion could be applied to the bounding boxes. Since the fields are the largest connected components, the size criterion would select them, even if their boundaries are not continuous. The bounding boxes could then be used to obtain data defining image 270.

Data defining image 270 can then be used to obtain data defining image 280, a version of image 270 in which pixels within segment 282 are all black and all other pixels are white. Pixels in segment 282 in image 280 could be discriminated from other pixels by applying a blank area criterion and a size threshold to each of the black segments in image 270. Data defining image 280 can then be used to obtain positioning data, such as data indicating the horizontal and vertical bounds of segment 282.

A variety of blank area criteria could be used to discriminate segment 282 from any segments that already include text or graphics. For example, the white pixels within a segment could be counted and a proportion of white pixels to total pixels in the segment could be obtained. This proportion could then be compared with a threshold to determine whether the segment is predominantly white. If not, the segment would not be a candidate to be filled.

Similarly, a variety of size thresholds could be used. For example, the size threshold could be a number of contiguous black pixels or a dimension, such as 25mm, in each direction. A segment below threshold, such as segment 274, would not be a candidate to be filled with text because of its small size. The threshold could be applied to a count of black pixels in each segment or to measurements of height and width of the largest rectangle that fits within each segment. Instead of using a default size threshold, data indicating the size threshold could be obtained from the user through marks on a form, through user i nterface circuitry, or through a graphical user interface.

Similarly, data defining image 260 can be used to obtain data defining image 290, a version of image 260 in which pixels within a bounding box around text 262 are all black and all other pixels are white. Image 290 could be a mask produced by techniques resembling those described in the image morphology application. Pixels in segment 292 in image 290 could be discriminated from other pixels by applying a text area criterion. A bounding box could then be obtained around segment 292, and the bounding box could be filled to produce data defining image 290. This technique would work for many images of text, and similar techniques could be developed for other text images.

A variety of text area criteria could be used. For example, a 4 times reduction with a horizontal filter could be performed, followed by a morphological horizontal close operation to fill in each line of text and a morphological vertical close operation to fill in each column of text. These operations can form a connected component in a region that includes horizontal lines of text. A bounding box can then be obtained around the connected component. Graphics can be removed from an image that includes text.

Data defining image 290 can then be used to extract data defining image 294, an image that includes only text 262. This can be done by inverting each pixel in image 290, and then, for each white pixel in the inverted image, obtaining the pixel from image 260 that is in the same position.

The dimensions of the bounding box of image 294 and the dimensions of the largest rectangle that can fit within segment 282 can then be used to determine whether image 294 should be scaled to fit within field 254. If so, an appropriate scaling can be performed in accordance with the techniques described in Scott et al., US-A 5,097,518, or other conventional techniques. Scaling of image 294 produces data defining image 296.

Data defining image 296 and data defining image 250 can then be used to produce data defining image 300, a version of image 250 in which field 302 shows the same sequence of words as text 262 in image 260, while the rest of image 300 is the same as the remainder of the form shown in image 250, including field 304, which is the same as field 252. Images 296 and 250 can be used, for example, by positioning the upper left hand corner of image 296 at the same position as the upper left hand corner of segment 282 in image 280 and then performing an OR operation between each pixel in image 250 and the pixel in the same position in image 296, if any. As a result, any pixel that is black in image 250 is also black in image 300, but a white pixel in image 250 that is at the same position as a black pixel in image 296 is switched to a black pixel, while other white pixels remain white.

Fig. 8 resembles Fig. 7, but shows an implementation in which the criteria and size threshold described above are not necessary.

In Fig. 8, image 320 shows a form that includes fields 322 and 324, as in image 250 in Fig. 7. In addition, a user has made mark 326 inside field 324 to indicate that field 324 should be filled with text.

Data defining image 320 can be used to obtain data defining image 330, a version of image 330 in which pixels within field 324 are all black and pixels outside field 324 are all white. Image 330 could be a mask produced by techniques like those described in the image morphology application. For example, a mask for fields 322 and 324 could be produced as described above in relation to image 270 in Fig. 7; then mark 326 could be detected based on its extent and curvature, a combined criterion that distinguishes it from small characters as well as from straight line features such as the boundaries of fields 322 and 324; a pixel from mark 326 could then be used as a seed to fill an inverted version of the mask; the filled inverted mask could be combined with the uninverted mask by an AND operation to obtain data defining image 330. Mark 326 could alternatively be a highlight mark, so that it could be detected using the techniques described in Bloomberg et al., US-A 5,048,109. Various other similar techniques could be used.

Data defining image 320 and data defining image 330 can then be used to obtain data defining image 340, a version of image 320 in which all pixels within the area defined by segment 332 in image 330 are white, thus removing mark 326. Like image 320, image 340 includes fields 342 and 344.

Image 350 shows text surrounded by mark 352. Mark 352 can be made by a user to indicate that the text it surrounds should be used to fill a field in the form shown in image 320.

Data defining image 350 can be used to obtain data defining image 360, a version of image 350 in which pixels within a bounding box around the text surrounded by mark 352 are all black and all other pixels are white. Image 360 could be produced by techniques like those described in the image morphology application. For example, mark 352 could be detected based on its extent and curvature, a combined criterion that distinguishes it from small characters such as those inside it; a mask for the text inside mark 352 could then be obtained using a technique like that described in relation to image 290 in Fig. 7, thus obtaining data defining image 360. Mark 352 could alternatively be a highlight mark, so that it could be detected using the techniques described in Bloomberg et al., US-A 5,048,109. Various other similar techniques could be used. If mark 352 crosses text, further steps may be needed to remove mark 352 from the text.

Data defining image 360 can tren be used to extract data defining image 364, which can be scaled to produce data defining image 366, as in Fig. 7. Further as in Fig. 7, data defining image 366 and data defining image 340 can then be used to produce data defining image 370, a merged image in which field 372 shows the same sequence of words as the text surrounded by mark 352 in image 350, while the rest of image 370 is the same as the remainder of the form shown in image 340, including field 374, which is the same as field 342.

Marks 326 and 352 in Fig. 8 could be made with a special marking substance to facilitate detection.

Fig. 9 resembles Figs. 7 and 8, but shows an implementation in which the criteria, size threshold, user marks, and much of the image processing described above are unnecessary.

In Fig. 9, image 400 shows a form that includes fields 402 and 404, as in image 250 in Fig. 7. In addition, image 400 includes machine readable form identifying information 406, which a processor receiving data defining image 400 can read to obtain data defining fields 402 and 404 and other features of the form shown by image 400. Using this data, the processor can determine that field 404 is the field into which text should be filled in response to a request for a form fill operation. The processor can further use this data to obtain positioning data indicating boundaries of field 404.

Image 410 shows text 412, with machine readable information 414 indicating where text 412 starts and with machine readable information 416 indicating where text 412 ends. A processor receiving data defining image 410 can therefore obtain data indicating the bounds of text 412.

The machine readable information in images 400 and 410 could be encoded and included in an image in the manner described in copending EP-A-0,469,864. The machine readable information could alternatively be encoded and included in an image in the manner described in Shepard, US-A 4,021,777.

Using data indicating the bounds of text 412 and data defining image 410, a processor can extract data defining image 420, which can be scaled to produce data defining image 422, as in Figs. 7 and 8 Further as in Figs. 7 and 8, data defining image 422 and data defining image 400 can then be used to produce data defining image 430, a merged image in which field 432 shows the same sequence of words as text 412 in image 410, while the rest of image 430 is the same as the remainder of the form shown in image 400, including field 434, which is the same as field 402.

Fig. 10 shows an example that could arise with any of the implementations described above. A processor receives a request for a form fill operation on images 450 and 460. Image 450 shows a form with field 452, which is at a slight counterclockwise skew. Image 460 shows text 462, which is at a slight clockwise skew. In addition to the opposite skews, field 452 has a relatively small height and large width, while text 462 has a relatively large height and small width.

The first step is to deskew the contents of both images. Data defining image 450 can be used to obtain data defining image 470, a version of image 450 in which field 472 is the same as field 452 but is not at a skew. Similarly, data defining image 460 can be used to obtain data defining image 480, a version of image 460 in which text 482 is the same as text 462 but is not at a skew. Skew can be detected and corrected as described in EP-A-0,431,962,and in Tanaka et al., US-A 4,759,076.

The next step is to obtain data defining an image in which text 482 is within field 472. Image 490 is an example that follows the implementations in Figs. 7-9, with text 482 being scaled so that it fits within field 492. But the words inside field 492 are so small that they are not sufficiently legible. Legibility could be determined by obtaining the height of the characters, such as by using the techniques described in copending EP-A-0,526,196, and by then comparing the height with a threshold below which characters are not sufficiently legible. Alternatively, legibility could be determined based on the extent of scaling--if it is necessary to reduce a text image by more than 50% to fit it within a field, for example, the text would not be sufficiently legible.

Upon determining that scaling does not produce a satisfactory image of text 482, the processor can reposition the words in text 482 so that they remain in the same order but result in a different shape. Image 500 is an example in which the word "lines" are repositioned on the first line and the words "were at a" are repositioned on the second line. This approach is also unsatisfactory in the illustrated example, however, because the word "skew" does not fit within field 502 and has therefore been omitted.

Instead of these approaches, data defining images 470 and 480 can be used to obtain data defining image 510, in which text 482 has been both scaled and reformatted to fit within field 512. The processor can automatically determine the scaling and reformatting in a variety of ways, based on the size of field 472 and on the word sizes and spacings in text 482. For example, text 482 could be reformatted into three lines and scaled to fit field 472; if this was not satisfactory, it could then be reformatted into two lines and scaled to fit, and, if still unsatisfactory, into one line, and so forth. Or all possible reformattings could be tried and compared to find the one that required the least scaling in order to fit field 472.

Reformatting as illustrated in Fig. 10 could also be applied to text that would fit within a field but that is formatted inappropriately for the field. For example, text in a narrow column can be reformatted to fit into a field that is wide, leaving additional space at the bottom of the field for further text.

### 3. Linking Fields and Text

In the implementations described above, a single text segment is used to fill a single field. In many applications, however, it is desirable to fill a number of different fields with text, where some of the fields may be continuations of other fields and where the text may be drawn from different parts of a document. This can be accomplished by linking each field with text to be used in filling the field.

Figs. 11-13 illustrate linking in a fill form operation. Fig. 11 illustrates how spacings between paragraphs of text can provide information used to link paragraphs to fields. Fig. 12 illustrates how marks in fields and in text can indicate continuations between fields and text segments so that a series of fields can be linked to a series of text segments. Fig. 13 illustrates how encoded information can indicate features of fields and text segments so that fields can be linked to appropriate text segments.

Fig. 11 illustrates a way of indicating text to go in different fields for use with the implementation of Fig. 7. Image 530 includes a number of lines of text that are divided into three paragraphs. Paragraphs 552 and 554 are separated by one space and paragraphs 554 and 556 are separated by two spaces. The spacings between paragraphs can be measured as described in EP-A-0,526,196; the technique described there could be applied to an appropriate segment of the image to measure a specific paragraph spacing.

A processor that receives data defining an image showing a form with more than one field and image 530 can use the differences in spacing to determine the linkings of fields and text. The processor can handle each field in the order in which it is found on the form and can fill each field with text in the order in which the text is found in image 530. The processor can thus link the text in paragraph 552 to a first field. Upon finding one space between paragraphs 552 and 554, the processor can also link the text in paragraph 554 to the first field. But upon finding two spaces between paragraphs 554 and 556, the processor can link paragraph 556 to a second field following the first field.

Fig. 12 illustrates a way of indicating continuations of fields and of text segments for use with the implementation of Fig 8.

Image 570 shows a form that includes machine readable form identifying information 572 that a processor can use to obtain data describing the form. For example, the identifying information could be used directly to obtain a description of the form or it could be used to obtain data for accessing a stored description of the form. The description of the form can then be used to obtain data from the fields of the form.

Image 570 includes a field for requesting a fill form operation, and check box 574 in this field is marked to indicate a request Another field includes check box grid 576 for indicating a two digit number of pages of a form to be filled, and a larger number could be written in boxes 578 for recognition by a processor if necessary.

A processor receiving data defining image 570 also receives a first set of images 580 showing a form and a second set of images 600 showing a text. From data defining image 570, the processor can obtain data indicating the number of pages indicated by marks in grid 576 and boxes 578. This number can then be used in finding the separation between images 580 and images 600.

The processor can obtain data about the fields in images 580 in sequence. Image 582 includes field 584 with mark 586 indicating that it should be filled. Image 588 includes field 590 with mark 592 indicating that it should be filled and also, since it includes a "c", indicating that it is a continuation of the immediately preceding field in the sequence, field 584. Image 588 also includes field 594 and image 596 includes field 598, each marked to indicate that it should be filled.

The processor can then link text from images 600 to the fields. Image 602 includes mark 604 indicating that the text segment it surrounds should be used to fill a field, so the text segment surrounded by mark 604 can be linked to field 584. Image 606 includes mark 608 indicating that the text segment it surrounds should be used, and the text segment is also marked with a "c", indicating that it is a continuation of the preceding marked text segment, so that the text segment surrounded by mark 608 can also be linked to field 584. Image 606 also includes mark 610 surounding a text segment and image 612 includes mark 614 surrounding a text segment, and these text segments can be linked to subsequent fields in the sequence, such as fields 594 and 598.

The processor can then use the linking data, together with data defining image sets 580 and 600, to produce data defining a form with text in the fields. If the text segment surrounded by mark 604 is too large for field 584, the overflow can go to field 590, since field 590 is a continuation of field 584. If the text segment surrounded by mark 604 does not fill field 584, part of the text segment surrounded by mark 608 can be used to fill field 584, because the text segment surrounded by mark 608 is a continuation of that in mark 604. If the text segment surrounded by marks 604 and 608 cannot be fit into fields 584 and 590, scaling and reformatting operations can be performed as described above.

The additional "c" marks in Fig 12 can be recognized and removed by techniques described in the image morphology application. For example, each "c" mark could be detected based on its curvature and extent, a combined criterion that distinguishes it from small characters as well as from straight line features such as the boundaries of fields; a pixel from each "c" mark could then be used as a seed to fill a mark that surrounds it, and further operations could be performed as described above in relation to Fig. 8 to obtain a mask for a field or a text; "c" marks that cross text can be removed by techniques as described in copending EP-A-0,543,599, the image morphology application. Various other similar techniques could be used. Rather than using a "c" to indicate continuations, numbers could be used. The mark, whether a "c" or a number, could be placed in a margin at the side of the text rather than on the text, to facilitate detection and removal.

Fig. 13 illustrates a way of indicating features of fields and of text segments for use with the implementation of Fig. 9.

Image 650 shows a sheet that includes machine readable identifying information 652 that a processor can use to obtain data describing the sheet. In the illustrated example, the sheet is a fill form cover sheet, indicating that a fill form operation is requested on the images of a form and of text that follow. Therefore, the identifying information can be used to obtain data indicating that a fill form operation is requested.

A processor receiving data defining image 650 also receives a first set of images 660 showing a form, a separator image 680 showing another sheet, and a second set of images 690 showing a text.

The processor can obtain data about the fields in images 660 using form identifying information. Image 662 includes machine readable form identifying information 664, which illustratively includes information indicating that field 666 in image 662 is a field of type "X". Similarly, image 668 includes machine readable form identifying information 670, which includes information indicating that field 672 in image 668 is a field of type "Y". Types X and Y could, for example, indicate the type of subject matter to go into each field, such as name and address in one field and description in another field. Or each field's type could indicate another feature of text to be included in the field, or it could indicate whether the field should be filled. In addition to the types, the form identifying information could indicate that a field is a continuation of another field, on the same sheet of the form or on another sheet.

Separator image 680 includes machine readable identifying information 682 that a processor can use to obtain data describing the sheet. In the illustrated example, the sheet is a separator sheet, indicating that the preceding image is the last image of the form and the next image is the first image of text.

After receiving separator image 680, the processor can link text segments from images 690 to fields in images 660. Image 692 includes text segment 694, with machine readable information 696 indicating the start of text segment 694 and machine readable information 698 indicating the end Machine readable information 696 and 698 can also indicate that text segment 694 is of type "Y", as shown, so that the processor links it to field 672 in image 668, which is also of type "Y" Similarly, image 700 includes text segment 702, with machine readable information 704 indicating the start of text segment 702 and machine readable information 706 indicating the end Machine readable information 704 and 706 can also indicate that text segment 702 is of type "X", as shown, so that the processor links it to field 666 in image 662, which is also of type "X".

The processor can then use the linking data, together with data defining image sets 660 and 690, to produce data defining a form with text segments in the fields. If a text segment cannot fit into fields to which it is linked, scaling and reformatting operations can be performed as described above.

Machine readable information 696, 698, 704, and 706 could be inserted in text by a text editor at a user's request.

Table I shows linking data that could be obtained for the fields and text segments

| Field ID/Location | Field Boundaries | Text Location | Text Boundaries | Continuation ? |
|---|---|---|---|---|
| Field 1/Sheet 1 | x1,y1,w1,h1 | Page 1 | x5,y5,w5,h5 | No |
| Field 1/Sheet 1 | x1,y1,w1,h1 | Page 2 | x6,y6,w6,h6 | Yes |
| Field 1/Sheet 2 | x2,y2,w2,h2 | | | |
| Field 2/Sheet 2 | x3,y3,w3,h3 | Page 2 | x7,y7,w7,h7 | No |
| Field 3/Sheet 3 | x4,y4,w4,h4 | Page 3 | x8,y8,w8,h8 | No |

| **Table 1: Linking Data** | | | | |
|---|---|---|---|---|
| | | | | |

shown in Fig. 12, including positioning data indicating boundaries of fields. The linking data can be stored in any appropriate data structure that permits a processor to access it in automatically obtaining data defining an image with text in fields.

As shown in Table I, the linking data can include a sequence of entries, each including several items of data. Each entry is illustratively shown beginning with a data item that identifies a field and indicates its sheet of the form. For field 1, which starts on sheet 1 and continues on sheet 2, the linking data includes entries both for the part of field 1 on sheet 1 and also for the part of field 1 on sheet 2.

Each entry also includes a data item indicating the field's location, illustratively indicated as the x- and y-coordinates of the upper left corner, a height and a width. Each entry then includes data items relating to a text segment linked to the field, so that field 1, which is linked to two text segments, includes separate entries for the segments.

The data items relating to each text segment include the page of text on which it appears, its location, and an indication whether it is a continuation of the text segment in the previous entry.

A processor using the linking data in Table I to determine how to fill fields first fills field 1 on sheet 1 with a text segment from page 1. If the text segment does not fill the field, a text segment from page 2 is also included in the field. Any overrun is put in field 1 on sheet 2, a continuation of field 1 on sheet 1. Then the remaining fields are filled with their respective text segments.

A data structure like Table I could similarly be prepared for the form fill operation requested in Fig. 13. In that case, the types indicated by the machine readable information are used in obtaining links between fields and text segments.

The scaling and reformatting operations described in relation to Fig. 10 can be used in combination with fields and text segments that have been linked as illustrated in Table I. For example, if a field and one or more continuations of the field are linked to a series of text segments, the text segments can be used to fill the field and its continuations without scaling or reformatting if possible. lf the last continuation is reached and the remaining text segments could not be legible if scaled to fit it, even if reformatted, then it is necessary to scale and perhaps reformat previous text segments to reduce the scaling needed in the last field.

### C. Applications

The invention could be applied in many ways to a wide variety of forms and texts.

The invention is especially useful where a form includes large text fields of varying sizes, into which a user desires to fill text. An invention proposal form, for example, may include a first sheet with many small fields and then one relatively large field for description of the invention. The description can be continued in even larger fields on subsequent sheets if necessary. In this example, a user could prepare the description of the invention with a standard text editor, print it, and use the technique of the invention to obtain an invention proposal form with the description in the appropriate fields. The remaining small fields could be completed by hand or with a typewriter.

### D. Miscellaneous

The invention has been described in relation to implementations in which images of a form and text, both received from a scanner, are automatically merged. The invention might also be implemented with images of a form and text that are received from sources other than a scanner.

The invention has been described in relation to software implementations, but the invention might be implemented with specialized hardware.

The invention has been described in relation to implementations that operate on text in the English language. The invention could readily be extended to text in other languages that follow the conventions of English relating to word positioning. The invention might also be extended to text in languages with other conventions, such as vertical lines, right-to-left lines, and so forth.

The invention has been described in relation to implementations that fill a field with text, but the invention might also be implemented to fill some fields with text and other fields with graphical items, where a graphical item could be scaled to fit a field but could not be reformatted. Some types of graphical items could be discriminated, and techniques could be developed to distinguish other types of graphical items.

The invention has been described in relation to implementations in which it is unnecessary to recognize characters or words within a text. The invention might, however, be implemented together with operations that perform character or word recognition.

The invention has been described in relation to implementations that obtain a different version of a text that includes words in the same order as in the text, but the invention might be used in combination with operations that modify a text by changing words or changing the order of words in the text.

## Claims

1. A method of operating a system that includes:
image input circuitry for receiving data defining images as input;
image output circuitry for providing data defining images as output; and
a processor connected for receiving data defining images from the image input circuitry and for providing data defining images to the image output circuitry;
the method comprising:
operating the processor to receive input image data from the image input circuitry; the input image data defining a first image set that shows a form that includes a first field and a second image set that shows a text;
operating the processor to use the input image data to automatically obtain form image data, text image data, and positioning data; the form image data defining an image of the form from the first image set; the text image data defining an image of the text from the second image set; the positioning data indicating positions of boundaries around the first field so that the text can be positioned within the first field; and
operating the processor to use the form image data, the text image data, and the positioning data to automatically obtain output image data and to provide the output image data to the image output circuitry; the output image data defining a third image set that shows the text and the form, the third image set showing the text positioned within the boundaries of the first field.

2. The method of claim 1 in which the first image set includes a plurality of pixels; the act of operating the processor to use the input image data comprising:
applying a blank area criterion to pixels in the first image set to obtain blank area data indicating a set of pixels that meet the blank area criterion; a set of pixels that meet the blank area criterion being likely to be a blank area; and
using the blank area data to obtain the positioning data.

3. The method of claim 1 in which the first image set shows a mark positioned inside the first field; the first image set including a plurality of pixels; the act of operating the processor to use the input image data comprising:
obtaining mark data indicating a set of pixels in the first image set that each meet a mark criterion; a pixel that meets the mark criterion being likely to be in a mark; and
using the mark data to obtain the positioning data.

4. The method of claim 1 in which the input image data include first image data defining the first image set; the first image data including boundary information indicating a boundary of the first field; the act of operating the processor to use the input image data comprising an act of using the boundary information in the first image data to obtain the positioning data.

5. The method of any one of claims 1 to 4 in which the second image set includes a plurality of pixels; the act of operating the processor to use the input image data comprising: applying a text area criterion to pixels in the second image set to obtain text area data indicating a set of pixels that meet the text area criterion; a set of pixels that meet the text area criterion being likely to be an area that includes text; and
using the text area data to obtain the text image data.

6. The method of any one of claims 1 to 4 in which the second image set shows a mark positioned to indicate the text; the second image set including a plurality of pixels; the act of operating the processor to use the input image data comprising:
obtaining mark data indicating a set of pixels in the first image set that each meet a mark criterion; a pixel that meets the mark criterion being likely to be in a mark; and
using the mark data to obtain the text image data.

7. The method of any one of claims 1 to 4 in which the input image data include second image data defining the second image set; the second image data including text information indicating the text; the act of operating the processor to use the input image data comprising an act of using the text information in the second image data to obtain the text image data.

8. The method of claim 1 in which the first image set includes a plurality of fields, the plurality of fields including the first field; the input image data further including field order information indicating an order of the fields that begins with the first field and continues to a second one of the fields; the text exceeding the first field in size; the act of using the input image data comprising an act of using the field order information in the input image data in obtaining first field image data and second field image data; the first field image data defining an image of a first part of the text that can fit within the first field; the second field image data defining an image of a second part of the text that can fit within the second field; the text image data including the first field image data and the second field image data.

9. The method of claim 1 in which the first image set includes a plurality of fields, the plurality of fields including the first field; the text including a plurality of segments; the input image data including linking information indicating, for each of the fields, a respective one of the segments; the act of operating the processor to use the input image data comprising:
using the linking information to obtain first field data indicating that a first one of the segments is a respective segment of the first field; and
using the first field data and the positioning data to obtain the text image data so that the text image data define the first segment of the text so that it can fit within the first field.

10. The method of claim 1 in which the second image set shows the text with a first shape; the positioning data indicating boundaries of the first field having a second shape different than the first shape; the text including a word that has a first position within the first shape of the text; the act of operating the processor to use the input image data comprising an act of using the input image data and the positioning data to obtain the text image data so that the text image data define an image showing the text with the second shape and so that the word has a second position within the second shape of the text, the second position being different than the first position.

11. The method of claim 1 in which the second image set shows the text with a first scale; the positioning data indicating boundaries of the first field into which the text with the first scale cannot fit; the act of operating the processor to use the input image data comprising an act of using the input image data and the positioning data to obtain the text image data so that the text image data define an image showing the text with a second scale different than the first scale so that the text with the second scale can fit into the boundaries indicated by the positioning data.

12. The method of claim 1 in which the input image data define a sequence of images that includes the first image set and the second image set; the first image set preceding the second image set in the sequence of images; the input image data including separation information indicating a separation between the first image set and the second image set; the act of operating the processor to use the input image data comprising an act of using the separation information in the input image data to separate the first image set and the second image set.

13. The method of claim 1 in which the form has a first skew direction in the first image set and the text has a second skew direction in the second image set; the act of operating the processor to use the input image data comprising an act of using the input image data to obtain skew correction data indicating a skew correction that is necessary to make the first skew direction and the second skew direction the same; the act of operating the processor to use the form image data, the text image data, and the positioning data comprising an act of using the skew correction data so that the third image set shows the text and the form at the same skew direction.

14. A system comprising:
image input circuitry for obtaining data defining images as input;
image output circuitry for providing data defining images as output;
memory storing data; and
a processor connected for receiving data defining images from the image input circuitry and for providing data defining images to the image output circuitry; the processor further being connected for accessing the data stored in memory;
the data stored in the memory indicating:
input instructions the processor can execute to receive input image data from the image input circuitry; the input image data defining a first image set that shows a form that includes a field and a second image set that shows a text;
data obtaining instructions the processor can execute to use the input image data to automatically obtain form image data, text image data, and positioning data; the form image data defining an image of the form from the first image set; the text image data defining an image of the text from the second image set; the positioning data indicating positions of boundaries around the field so that the text can be positioned within the field; and
output instructions the processor can execute to use the form image data, the text image data, and the positioning data to automatically obtain obtain output image data and to provide the output image data to the image output circuitry; the output image data defining a third image set that shows the text and the form, the third image set showing the text positioned within the boundaries of the field.

15. An article of manufacture for use in a system that includes:
image input circuitry for obtaining data defining images as input;
image output circuitry for providing data defining images as output;
memory for storing data;
a storage medium access device for accessing a medium that stores data; and
a processor connected for receiving data defining images from the image input circuitry and for providing data defining images to the image output circuitry; the processor further being connected for receiving data from the storage medium access device;
the article comprising:
a data storage medium that can be accessed by the storage medium access device when the article is used in the system; and
data stored by the data storage medium so that the storage medium access device can provide the stored data to the processor when the article is used in the system; the stored data indicating:
input instructions the processor can execute to receive input image data from the image input circuitry; the input image data defining a first image set that shows a form that includes a field and a second image set that shows a text;
data obtaining instructions the processor can execute to use the input image data to automatically obtain form image data, text image data, and positioning data; the form image data defining an image of the form from the first image set; the text image data defining an image of the text from the second image set; the positioning data indicating positions of boundaries around the field so that the text can be positioned within the field; and
output instructions the processor can execute to use the form image data, the text image data, and the positioning data to automatically obtain obtain output image data and to provide the output image data to the image output circuitry; the output image data defining a third image set that shows the text and the form, the third image set showing the text positioned within the boundaries of the field.
